# EUROPEAN PATENT SPECIFICATION

(11) **EP 3 354 788 B1**
(45) Date of publication and mention of the grant of the patent: **21.07.2021**
(21) Application number: 16848054.9
(22) Date of filing: 14.09.2016
(51) Int. Cl.: D06F 39/02, D06F 39/08, A47L 15/44

(54) **AUTOMATIC DETERGENT ADDING SYSTEM AND WASHING MACHINE**
AUTOMATISCHES WASCHMITTELZUGABESYSTEM UND WASCHMASCHINE
SYSTÈME D'AJOUT DE DÉTERGENT AUTOMATIQUE ET MACHINE À LAVER

(30) Priority: 21.09.2015 CN 201510603580
(43) Date of publication of application: 01.08.2018
(73) Proprietor: Qingdao Haier Drum Washing Machine Co., Ltd., Qingdao, Shandong 266101 (CN)
(72) Inventor: ZHANG, Tao, Qingdao Shandong 266101 (CN); ZHANG, Chunfeng, Qingdao Shandong 266101 (CN); SUN, Yunpeng, Qingdao Shandong 266101 (CN); WANG, Wenjian, Qingdao Shandong 266101 (CN); GUO, Qichao, Qingdao Shandong 266101 (CN); YUAN, Chuanqing, Qingdao Shandong 266101 (CN)
(74) Representative: Ziebig & Hengelhaupt Patent- und Rechtsanwaltskanzlei PartG mbB
(86) International application number: PCT/CN2016/099028
(87) International publication number: WO 2017/050172

(56) References cited:
- WO-A1-2015/096407
- CN-A- 102 182 049
- CN-A- 104 109 965
- CN-A- 104 499 244
- CN-U- 201 854 861
- CN-U- 202 053 990
- CN-U- 203 229 783
- CN-U- 203 229 783
- DE-A1-102006 029 953
- US-A- 6 035 472
- US-A1- 2003 230 122
- US-B1- 7 784 310

## Description

### TECHNICAL FIELD

The disclosure relates to the technical field of washing machines, and in particular relates to an automatic adding system for adding detergent, de-germing agent softener and the like to a washing machine, and a washing machine.

### BACKGROUND

An existing washing machine is generally provided with a detergent (including softener and de-germing agent) feeding device for dissolving detergent and then conveying dissolved detergent into an outer drum of the washing machine. But before the washing machine works, a user needs to add the detergent into a detergent box based on own feelings, so that the detergent is inconvenient to add, and meanwhile the amount of detergent added is also difficult to grasp. Along with the improvement on automation of the washing machine, at present, more and more washing machines are provided with automatic detergent adding devices.

In the prior art, an automatic detergent adding device is provided with a detergent storage box for storing the detergent, a certain amount of detergent is extracted from the detergent storage box and added into the outer drum of the washing machine via the automatic detergent adding device, and then clothes are washed. The detergent is not dissolved and diluted during an automatic detergent adding process, so that the detergent is put onto a part of clothes in a concentrated manner, and the part of the clothes may fade, while the other clothes may not be in full contact with the detergent, and thus the clothes cannot be cleaned.

In order to overcome the abovementioned problem, the automatic detergent adding device in the prior art is also provided with a detergent diluting box or a water injection slot component of a washing machine, and the certain amount of detergent is extracted from the detergent storage box and added into the detergent diluting box or the water injection slot component of the washing machine via the automatic detergent adding device, and washed into a washing drum by tap water from a water inlet pipeline. A Chinese patent with an application number of CN02121057.8 discloses an automatic liquid detergent feeding device of a washing machine; the device comprises a detergent storage box, an air press-in part, an exhaust pipe and a discharge pipe, wherein the detergent storage box is positioned at the upper part of a washing slot, and liquid detergent in a proper water level as well as an airtight air layer are stored in the sealed detergent storage box. The exhaust pipe is arranged between the detergent storage box and the air press-in part; one end of the discharge pipe is connected with one side of the detergent storage box while the other end of the discharge pipe is connected with the washing slot via a specified path.

A Chinese patent with an application number of CN201220574733.2 discloses an automatic liquid detergent feeding device comprising a water injection box, a drawer box installed in the water injection box, a detergent temporary storage box connected with the water injection box, a pump connected with the detergent temporary storage box, and a liquid detergent conveying pipeline. The drawer box comprises a detergent storage box positioned on the inner side of the water injection box and a distribution box connected with the detergent temporary storage box, and an opening through which the drawer box can be put in or taken out is formed in the outer side of the water injection box.

It can be known that in the automatic detergent adding device, the detergent in the detergent diluting box or the water injection slot component of the washing machine is washed into the outer drum of the washing machine by inlet water. Although such structure can achieve automatic adding of the detergent and dissolve and dilute the detergent, the automatic detergent adding device is complex in structure and high in cost due to arrangement of the detergent diluting box or the water injection slot component of the washing machine. Furthermore, after the washing machine is used for a long time, the detergent may be coagulated and remain in the detergent diluting box or the water injection slot component of the washing machine, which increases the burden of cleaning the detergent diluting box or the water injection slot component of the washing machine. Furthermore, through actual application of the washing machine with the detergent diluting box or the water injection slot component of the washing machine, it can be found that during a washing process, the phenomenon that detergent foam overflows the detergent diluting box or the water injection slot component of the washing machine may occur due to a sealing problem, which brings great inconvenience to the user. Furthermore, by using the abovementioned structure, water flows too fast or mixing time of the detergent and the tap water is too short, so that the detergent cannot be fully mixed with the water, and thus the washing efficiency is not high, the clothes are not thoroughly cleaned, and the clothes may fade and fibers of the clothes may even be damaged in washing.

US 6 035 472 A describes a fluid delivery system for transferring fluids from a set of containers that hold different types of chemicals to a washing machine.

US 7 784 310 B1 is directed to a washing machine that is to automatically dispense the necessary cleaning and treatment chemicals at the proper times in optimally measured doses within the wash basin of the machine.

CN 102182 049 A discloses a detergent pouring and mixing device for a washing machine.

Further, WO 2015/096407 A1 shows a washing machine control panel base with a function of automatically adding a detergent.

CN 203 229 783 U discloses a water feeding system of a roller washing machine.

Finally, DE 10 2006 029953 A1 describes a washing machine with a controllable supply of tab water.

Therefore, the present disclosure is provided.

### SUMMARY

The technical problem to be solved by the disclosure is to provide an automatic detergent adding system to overcome defects of the prior art, solve the problems that an existing automatic detergent adding device is complex in structure and high in cost, and meanwhile overcome the problems that the clothes are damaged and insufficiently washed due to the fact that the detergent is not fully dissolved before entering the outer drum of the washing machine.

In order to solve the abovementioned technical problems, the invention is solved by the features of independent claim 1. Preferred embodiments of the invention are defined in the dependent claims. An embodiment of the invention is directed to an automatic detergent adding system, comprising a detergent container containing detergent, and an automatic detergent feeding device connected with the detergent container, wherein the automatic detergent feeding device communicates with a pipe joint of a water inlet pipeline of a washing machine, and the pipe joint communicates with a water conduit connected with an outer drum. The detergent in the automatic detergent feeding device and the tap water from the water inlet pipeline are converged and flow to the outer drum via the water conduit, and a water injection slot component of a washing machine in the prior art is omitted, so that the detergent enters a washing drum after being fully dissolved, and thus the washing efficiency is improved.

The automatic detergent feeding device comprises a conveying pipe communicating with the pipe joint, a draw-off pump of which one end is connected with the conveying pipe, another end is connected with the detergent container, and a control device separately connected with a washing machine controller and the draw-off pump.

The automatic detergent feeding device is provided with the conveying pipe connected with the pipe joint, wherein the pipe joint is a bowl-shaped or hollow hemispherical structure, an opening end of the pipe joint is connected with the water conduit, a conveying opening is formed in the pipe joint, the conveying pipe communicates with the pipe joint via the conveying opening, the pipe joint is also provided with a water inlet, the water inlet pipeline communicates with the pipe joint via the water inlet, and the conveying opening is deviated from a water flow direction in the water inlet.

A pipe body of the connected part of the conveying pipe for connecting with the pipe joint is an elbow pipe, and the elbow of the elbow pipe is arranged to face the conveying opening.

The water inlet is located at one end of the pipe joint away from the water conduit, and the conveying opening is located at a middle of the pipe joint or at one end of the pipe joint close to the water conduit.

The water inlet comprises a first water inlet and a second water inlet, and the first water inlet and the second water inlet are symmetrically arranged with respect to an axis of the pipe joint. Since the pipe joint is of the bowl-shaped structure, the water inlet will have a certain degree of inclination, so that opposite collision of inlet water flows is formed at a middle of the pipe joint. Preferably, the water inlet is positioned on the side of the pipe joint away from the water conduit, and the conveying opening is positioned at a middle of the pipe joint, the detergent is mixed with the tap water at the opposite collision part of the water flows to be dissolved preliminarily, and thus the mixing efficiency of the detergent and the tap water can be further improved.

The water conduit is provided with a detergent dissolving structure, the detergent dissolving structure is a flowing-around structure and/or a structure for prolonging the flow time of fluid. When a mixture of the detergent and the tap water passes through the water conduit, the detergent is fully dissolved, so that the washing efficiency is improved, and the damage to the clothes can be avoided.

The flowing-around structure is a plurality of protrusions/grooves distributed on an inner wall of the pipe body along a length direction of the pipe body, preferably, the water conduit is a corrugated pipe. Therefore, the washing efficiency can be improved, and when the washing machine vibrates, influence on the pipeline is also reduced by using mechanical property of the corrugated pipe.

In the water conduit, the structure for prolonging the flow time of the fluid is a spiral pipe or other bent pipe. Since such arrangement, the flow time of the tap water and the detergent in the water conduit is prolonged, and the detergent is also better dissolved in the water.

After using the technical scheme, compared with the prior art, the present disclosure has the beneficial effects as follows:
the present disclosure provides an automatic detergent adding system by improving an existing automatic detergent adding device of washing machine. The water inlet pipeline is connected with the detergent conveying pipe via the water conduit, the detergent and the tap water are guided into the outer drum via the water conduit connected with the outer drum for washing. So that a water injection slot component in an original washing machine is omitted. The structure is simple, and a series of problems caused by existence of the water injection slot component are also avoided. The water and the detergent are preliminarily mixed in the pipe joint before flowing into the water conduit, and the washing efficiency is improved. In order to further mix the detergent with the water, the present disclosure improves positions of the water inlet of the water inlet pipeline and the conveying opening of the conveying pipe, and the water conduit is set to be the special structure, namely the flowing-around structure or the structure for prolonging the flow time of the tap water and the detergent. So that the detergent is fully dissolved, the manufacturing cost is reduced, mixing of the detergent and the water is accelerated, the clothes washing efficiency is improved, and the problems that the clothes fade and fibers of the clothes are damaged due to over high concentration of the detergent are avoided.

The disclosure also provides a washing machine having the automatic detergent adding system, and the washing machine has the beneficial effects which is the same as the abovementioned beneficial effects.

In the following, the present disclosure is further specifically described through combining with the drawings.

### BRIEF DESCRIPTION OF THE DRAWINGS

Fig. 1 is a structural schematic diagram of an automatic detergent adding system provided by the present disclosure;
Fig. 2 and Fig. 3 are structural schematic diagrams of an embodiment of an automatic detergent adding system provided by the present disclosure;
in the drawings, detergent container 1, automatic detergent feeding device 2, water inlet pipeline 3, pipe joint 4, water conduit 5, conveying pipe 6, draw-off pump 7, conveying opening 8, water inlet 9, first water inlet 91, second water inlet 92 and detergent dissolving structure 10.

### DETAILED DESCRIPTION

In order to achieve the clearer objects, technical schemes and advantages of the embodiments of the present disclosure, the technical schemes in the embodiments will be clearly and completely described with reference to the drawings in the embodiments of the present disclosure; the embodiments are used for illustrating the present disclosure and should not be construed to limit the scope of the present disclosure.

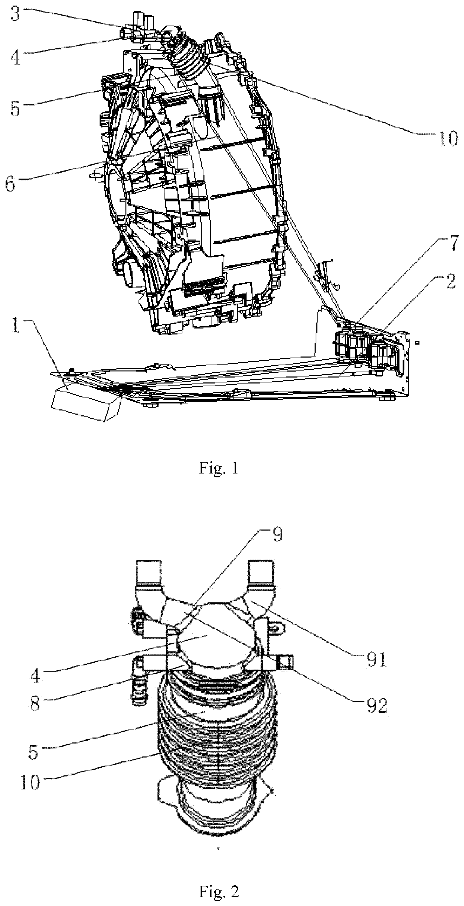

As shown in Fig. 1, an automatic detergent adding system provided by the present disclosure comprises a detergent container 1, and an automatic feeding device 2 connected with the detergent container 1. The automatic feeding device 2 is connected with a pipe joint 4 of a water inlet pipeline 3, the pipe joint 4 is connected with an outer drum of a washing machine via a water conduit 5. The tap water and detergent flow into a washing drum for washing after being fully mixed via the pipe joint 4 and the water conduit 5. When clothes are washed, the automatic detergent feeding device 2 automatically extracts a certain amount of detergent from the detergent container 1 according to the condition of the clothes to be washed, and feeds the detergent into the pipe joint 4 of the water inlet pipeline 3. Water is fed into the water inlet pipeline 3 via water inlet valves of a washing machine, and the tap water is converged with the detergent while flowing through the pipe joint 4, and continuously flows through the water conduit 5. During such a process, the water is mixed with the detergent, the detergent is dissolved and diluted, and finally, the water and the detergent are converged and flow into the outer drum of the washing machine along the water conduit 5. In the automatic detergent adding system, the detergent is dissolved and diluted by inlet water in the water conduit 5, and flows into the outer drum of the washing machine. So that a detergent diluting box or a water injection slot component of a washing machine is omitted, and thus the structure is simplified, and the cost is reduced. Meanwhile, the detergent is dissolved and diluted by water in the water conduit 5, and then flows into the outer drum of the washing machine. So that the detergent is uniformly distributed on the clothes and the utilization rate of the detergent is improved. The problem in the prior art that the detergent is put onto a certain part of clothes in a concentrated manner causing damage to the clothes or the clothes may not be in full contact with the detergent causing the clothes not to be washed is solved, and the washing efficiency is ensured.

### Embodiment 1

As shown in Fig. 1, an automatic feeding device 2 provided by the embodiment comprises a conveying pipe 6 communicating with a water conduit 5, a draw-off pump 7 of which one end is connected with the conveying pipe 6 and the other end is connected with the detergent container, wherein the automatic feeding device 2 may be provided with the other detergent extraction device instead of the draw-off pump. For example, a device for extracting the detergent by using the action of hydraulic pressure, or a device for extracting the detergent by using a Venturi principle. The detergent is added in a pumping manner due to the fact that the draw-off pump is adjustable in lift, and the conveying capacity and the conveying efficiency can be ensured. The automatic feeding device 2 is also provided with a control device (not shown in figures) separately connected with a washing machine controller and the draw-off pump 7, which is used for adding different kinds of detergents during different washing processes. For example, the detergent is added when washing, and the softener is added when rinsing. The adding amount and adding time of the detergent are automatically adjusted by the washing machine controller, and thus automatic adding of the detergent is achieved.

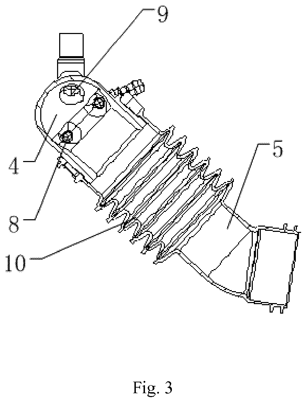

As shown in Fig. 2 and Fig. 3, as a further preferred embodiment of the present disclosure, a pipe joint 4 is of a bowl-shaped or hollow hemispherical structure; such arrangement is used for ensuring that the direction of a water flow has a certain gradient when the water flow enters the pipe joint 4; the pipe joint 4 certainly can also be set to be a pipe body in other shapes, such as a columnar cavity, and the purpose that the inlet water flow enters the pipe joint 4 with a certain gradient can also be achieved by adjusting the direction of the water inlet pipeline. An opening end of the pipe joint 4 and a water conduit 5 are connected via a fixing clamp, and a sealing piece is arranged; and the pipe joint 4 and the water conduit 5 certainly can also be integrally connected to achieve better sealing effect.

As shown in Fig. 2 and Fig. 3, as a further preferred embodiment of the present disclosure, a conveying opening 8 at the connected part of the conveying pipe 6 and the pipe joint 4 and a water inlet 9 at the connected part of the water inlet pipeline 3 and the pipe joint 4 are not oppositely arranged with respect to the axis of the pipe joint 4. That is to say, the conveying opening is deviated from a water flow direction in the water inlet, a liquid inlet direction of the conveying opening 8 is not in a straight line with the water flow direction in the water inlet 9. As most detergent is relatively thick and has poorer flowability compared with water, such arrangement is used for preventing the water flow from entering the conveying pipe 6 or preventing the detergent in the conveying opening 8 from flowing out due to opposite arrangement of the conveying opening 8 and the water inlet 9.

As shown in Fig. 1, as a further preferred embodiment of the present disclosure, a pipe body of the connected part of the conveying pipe 6 for connecting with the pipe joint 4 is an elbow pipe, and the elbow is arranged to face the conveying opening 8. Preferably, the elbow is bent for 90 degrees, so that the water flow is not prone to be directly washed into the conveying pipe, and meanwhile the conveying efficiency can be ensured.

As shown in Fig. 2 and Fig. 3, in order to accelerate full dissolving of the detergent in the tap water, the water inlet pipeline is provided with multiple water inlets 9, preferably having two water inlets 9, namely a first water inlet 91 and a second water inlet 92 which are symmetrically arranged with respect to the axis of the pipe joint 4. And the pipe wall of the pipe joint 4 is arc-shaped, the water flows entering from the two water inlets are converged in the pipe joint 4, and opposite collision of the water flows is formed, so that dissolving of the detergent in the tap water is accelerated. Preferably, the water inlet 9 is positioned on the side, far away from the water conduit 5, of the pipe joint 4, and the conveying opening 8 is positioned at a middle of the pipe joint 4 or at the part, close to the water conduit 5, of the pipe joint 4, so that the detergent conveyed by the conveying opening 8 is converged with the tap water in opposite collision of the water flows and preliminarily mixed with the tap water.

### Embodiment 2

As shown in Fig. 2 and Fig. 3, as a further preferred embodiment of the present disclosure, a water conduit 5 is provided with a detergent dissolving structure 10 for accelerating mixing of the detergent and the tap water, and the detergent dissolving structure 10 is a flowing-around structure. According to the above description of the automatic detergent adding system provided by the present disclosure, it can be known that the inlet water flows through the water conduit 5 to be mixed with the detergent and flows into the outer drum of the washing machine. Due to the fast flow speed of the inlet water, part of detergent may flow into the outer drum of the washing machine along with the inlet water without being fully dissolved and diluted. So that the detergent dissolving structure 10 is arranged in the water conduit 5 which is positioned between the detergent conveying opening 8 and the outer drum of the washing machine, for reducing the flow speed of the inlet water or allowing the water to flow around, and prolonging the mixing time of the water flow passing through the water conduit 5 and the detergent, and thus the detergent is fully dissolved and diluted.

Preferably, the detergent dissolving structure 10 is a plurality of protrusions/grooves distributed on the inner wall of the pipe body along the length direction of the pipe body. The mixture of the water and the detergent flows through the protrusions/grooves, so that on the one hand, the flow speed of the water flow is reduced under the action of the protrusions/grooves, and on the other hand, the detergent is fully dissolved and diluted during such a process.

More preferably, the water conduit 5 is a corrugated pipe which also plays a role in allowing the flows to flow around. So that the detergent flows into the outer drum of the washing machine after being fully dissolved and diluted, and influence on the pipeline produced by vibration of the washing machine can also be reduced by using the mechanical property of the corrugated pipe.

### Embodiment 3

The only difference between the embodiment and the embodiment 2 is that the detergent dissolving structure 10 of the water conduit 5 is a spiral pipe or other bent pipe structure. Such arrangement is used for prolonging the flow time of the tap water and the detergent in the water conduit 5 and enabling the detergent to be better dissolved in water. The flowing-around structure composed of the plurality of protrusions or grooves certainly can also be arranged in the spiral pipe or the bent pipe for enabling the detergent to be better fully dissolved in the tap water. So that the washing efficiency of the washing machine is improved, and the situation that the detergent is not fully dissolved and thus the clothes are damaged is avoided.

### Embodiment 4

As show in Fig. 1, on the basis of the abovementioned embodiments, as a further preferred embodiment of the present disclosure, an automatic detergent adding system can be provided with a plurality of detergent containers 1 and a conveying pipe 6, and a plurality of conveying openings 8 are correspondingly arranged on the pipe joint 4. When the clothes are washed, the user often also needs to add the degerming agent to degerm the clothes or add the softener to soften the clothes according to needs on the basis of adding the detergent. In order to meet the needs, as shown in Fig. 1, an automatic detergent adding system provided by the present disclosure is provided with a plurality of automatic detergent feeding devices 2, a plurality of detergent conveying openings 8 and a plurality of detergent containers 1.

Among them, one automatic detergent feeding device corresponds to one detergent conveying opening, and also corresponds to one detergent container at the same time, which satisfies the needs of users to add detergents, degerming agents or softeners and realizes the independent automatic feeding of different kinds of detergent, the degerming agent and the softener, which is to prevent the detergents or the disinfectants or the softeners from being mixed with each other and to ensure that the detergents exert their respective effects.

As shown in Fig. 1, when the clothes are washed, proper water temperatures are selected according to different clothes conditions for improving washing effect of the clothes. The water inlet pipeline 3 of present disclosure is provided with a cold water pipeline and a hot water pipeline of which water-out is controlled by water inlet valves. When the clothes are washed, different water inlet valves of the washing machine control inlet water with different temperatures, the inlet water enters the water conduit 5 via the water inlet 9, inlet water with the needed proper temperature is formed by mixing, and flows into the outer drum of the washing machine via the water conduit 5 for washing the clothes, so that the washing efficiency is improved.

The specific working process of the present disclosure is described below with reference to the abovementioned embodiments.

When the user needs to wash clothes, the washing machine controller open the water inlet valve of the cold water pipeline and the water inlet valve of the hot water pipe at first. The water temperature is adjusted according to the washing needs, then the automatic detergent feeding device 2 is switched on, the control device controls the draw-off pump 7 to extract the detergent from the detergent container 1 via the conveying pipe 6 for adding the detergent, and the control device can select the dosage of the detergent, and select the detergent according to different washing processes, for example, the detergent is added during the washing process, and the softener is added during the rinsing process. The water inlet pipeline 3 is provided with two water inlet pipelines which are symmetrical with respect to the axis of the pipe joint 4, and thus a dual-water inlet structure composed of the first water inlet 91 and the second water inlet 92 is formed. As the pipe joint 4 is of the bowl-shaped or hollow hemispherical structure, the tap water has a certain gradient while flowing through the pipe joint 4 from the water inlet 9, so that opposite collision of the water flows is formed in the pipe joint 4. When the detergent enters into the pipe joint 4 via the conveying pipe 6 and the conveying opening 8, the detergent is preliminarily mixed with the tap water under the opposite collision of the water flows. And then the mixture of the tap water and the detergent enters into the water conduit 5. As the water conduit 5 is provided with the detergent dissolving structure 10, namely the flowing-around structure and/or the structure for prolonging the flow time of the tap water, the detergent and the tap water are fully mixed again in the water conduit 5, and finally flow into the outer drum of the washing machine for washing the clothes. The detergent diluting box or the water injection groove component of the washing machine is omitted. The structure is simplified, the cost is reduced, and meanwhile the washing efficiency is improved and the damage to the clothes is avoided.

It should be stated that the embodiment schemes in the embodiments can be further combined or replaced, the embodiments are only description of the preferred embodiments of the present disclosure, but without limiting the concept and scope of the present disclosure, and various modifications or improvements made by those skilled in the art without departing from the design ideas of the present disclosure should be considered as falling within the scope of the present disclosure.

## Claims

1. An automatic detergent adding system, comprising:
a detergent container (1) containing detergent, and
an automatic detergent feeding device (2) connected with the detergent container (1),
wherein the automatic detergent adding system also comprises:
a pipe joint (4) separately communicating with the automatic detergent feeding device (2) and a water inlet pipeline (3),
the automatic detergent adding system further comprises a water conduit (5) communicating with an outer drum, and
the pipe joint (4) is connected with the water conduit (5),
the automatic detergent feeding device (2) is provided with a conveying pipe (6) that is adapted to convey the detergent,
the pipe joint (4) is a bowl-shaped or hollow hemispherical structure, an opening end of the pipe joint (4) is connected with the water conduit (5),
a conveying opening (8) is formed in the pipe joint (4) and the conveying pipe (6) communicates with the pipe joint (4) via the conveying opening (8),
the pipe joint (4) is also provided with a water inlet (9), the water inlet pipeline (3) communicates with the pipe joint (4) via the water inlet (9), **characterized in that**
a liquid inlet direction of the conveying opening (8) is deviated from a water flow direction in the water inlet (9) with the water inlet (9) comprising a first water inlet (91) and a second water inlet (92), the first water inlet (91) and the second water inlet (92) being symmetrically arranged with respect to an axis of the pipe joint (4) so that the detergent is dissolved and diluted by inlet water while flowing through the pipe joint (4) and continuously in the water conduit (5), before flowing into the outer drum.

2. The automatic detergent adding system according to claim 1, **characterized by** a draw-off pump (7) of which one end is connected with the conveying pipe (6) and another end is connected with the detergent container (1), and
a control device separately connected with a washing machine controller and the draw-off pump (7).

3. The automatic detergent adding system according to claim 1 or 2, **characterized in that** a pipe body of the connected part of the conveying pipe (6) for connecting with the pipe joint (4) is an elbow pipe, and the elbow of the elbow pipe is arranged to face the conveying opening (8).

4. The automatic detergent adding system according to claim 1 or 3, **characterized in that** the water inlet (9) is located at one end of the pipe joint (4) away from the water conduit (5), and
the conveying opening (8) is located at a middle of the pipe joint or at one end of the pipe joint (4) close to the water conduit (5).

5. The automatic detergent adding system according to any one of claims 1-4, **characterized in that** the water conduit (5) is provided with a detergent dissolving structure (10), the detergent dissolving structure (10) is a flowing-around structure and/or a structure for prolonging the flow time of fluid.

6. The automatic detergent adding system according to claim 5, **characterized in that** the flowing-around structure is a plurality of protrusions/grooves distributed on an inner wall of the pipe body along a length direction of the pipe body,
preferably, the water conduit (5) is a corrugated pipe.

7. The automatic detergent adding system according to claim 5 or 6, **characterized in that** in the water conduit (5), the structure for prolonging the flow time of the fluid is a spiral pipe or other bent pipe.

8. A washing machine having the automatic detergent adding system according to any one of claims 1-7.

## Patentansprüche

1. Automatisches Waschmittelzugabesystem, umfassend:
einen Waschmittelbehälter (1), der Waschmittel enthält, und
eine automatische Waschmittelzuführvorrichtung (2), die mit dem Waschmittelbehälter (1) verbunden ist,
wobei das automatische Waschmittelzugabesystem außerdem Folgendes umfasst:
eine Rohrverbindung (4), die separat mit der automatischen Waschmittelzuführvorrichtung (2) und einer Wasserzulaufleitung (3) in Verbindung steht,
wobei das automatische Waschmittelzugabesystem ferner Folgendes umfasst:
eine Wasserleitung (5), die mit einer Außentrommel in Verbindung steht, und
wobei die Rohrverbindung (4) mit der Wasserleitung (5) verbunden ist,
wobei die automatische Waschmittelzuführvorrichtung (2) mit einem Förderrohr (6) versehen ist, das dazu ausgelegt ist, das Waschmittel zu fördern,
wobei die Rohrverbindung (4) eine schalenförmige oder hohle, halbkugelförmige Struktur ist, wobei ein Öffnungsende der Rohrverbindung (4) mit der Wasserleitung (5) verbunden ist,
wobei in der Rohrverbindung (4) eine Förderöffnung (8) gebildet ist und das Förderrohr (6) über die Förderöffnung (8) mit der Rohrverbindung (4) in Verbindung steht,
wobei die Rohrverbindung (4) außerdem mit einem Wasserzulauf (9) versehen ist, wobei die Wasserzulaufleitung (3) über den Wasserzulauf (9) mit der Rohrverbindung (4) in Verbindung steht, **dadurch gekennzeichnet, dass**
eine Flüssigkeitszulaufrichtung der Förderöffnung (8) von einer Wasserströmungsrichtung in dem Wasserzulauf (9) abweicht, wobei der Wasserzulauf (9) einen ersten Wasserzulauf (91) und einen zweiten Wasserzulauf (92) umfasst, wobei der erste Wasserzulauf (91) und der zweite Wasserzulauf (92) symmetrisch zu einer Achse der Rohrverbindung (4) angeordnet sind, sodass das Waschmittel von Zulaufwasser aufgelöst und verdünnt wird, während es durch die Rohrverbindung (4) und kontinuierlich in der Wasserleitung (5) strömt, bevor es in die Außentrommel strömt.

2. Automatisches Waschmittelzugabesystem nach Anspruch 1, **gekennzeichnet durch** eine Absaugpumpe (7), von der ein Ende mit dem Förderrohr (6) verbunden ist und ein anderes Ende mit dem Waschmittelbehälter (1) verbunden ist, und
eine Steuervorrichtung, die separat mit einer Waschmaschinensteuerung und der Absaugpumpe (7) verbunden ist.

3. Automatisches Waschmittelzugabesystem nach Anspruch 1 oder 2, **dadurch gekennzeichnet, dass** ein Rohrkörper des verbundenen Teils des Förderrohrs (6) zur Verbindung mit der Rohrverbindung (4) ein Rohrbogen ist, und der Bogen des Rohrbogens derart angeordnet ist, dass er der Förderöffnung (8) zugewandt ist.

4. Automatisches Waschmittelzugabesystem nach Anspruch 1 oder 3, **dadurch gekennzeichnet, dass** der Wasserzulauf (9) an einem Ende der Rohrverbindung (4) angeordnet ist, das entfernt von der Wasserleitung (5) ist, und
die Förderöffnung (8) in einer Mitte der Rohrverbindung oder an einem Ende der Rohrverbindung (4) angeordnet ist, das sich in der Nähe der Wasserleitung (5) befindet.

5. Automatisches Waschmittelzugabesystem nach einem der Ansprüche 1 - 4, **dadurch gekennzeichnet, dass** die Wasserleitung (5) mit einer Struktur zur Auflösung von Waschmittel (10) versehen ist, wobei die Struktur zur Auflösung von Waschmittel (10) eine Umströmungsstruktur und/oder eine Struktur zur Verlängerung der Strömungszeit des Fluids ist.

6. Automatisches Waschmittelzugabesystem nach Anspruch 5, **dadurch gekennzeichnet, dass** die Umströmungsstruktur eine Mehrzahl von Vorsprüngen/Nuten ist, die entlang einer Längsrichtung des Rohrkörpers an einer Innenwand des Rohrkörpers verteilt sind,
wobei die Wasserleitung (5) vorzugsweise ein Wellrohr ist.

7. Automatisches Waschmittelzugabesystem nach Anspruch 5 oder 6, **dadurch gekennzeichnet, dass** in der Wasserleitung (5) die Struktur zur Verlängerung der Strömungszeit des Fluids ein Spiralrohr oder ein anderes gebogenes Rohr ist.

8. Waschmaschine, aufweisend das automatische Waschmittelzugabesystem nach einem der Ansprüche 1 bis 7.

## Revendications

1. Système d'ajout de détergent automatique, comprenant :
un bac à détergent (1) contenant du détergent, et
un dispositif d'alimentation en détergent automatique (2) relié au bac à détergent (1),
dans lequel le système d'ajout de détergent automatique comprend également :
un raccord de tuyau (4) communiquant séparément avec le dispositif d'alimentation en détergent automatique (2) et une canalisation d'admission d'eau (3),
le système d'ajout de détergent automatique comprend en outre
un conduit d'eau (5) communiquant avec un tambour extérieur, et
le raccord de tuyau (4) est relié au conduit d'eau (5),
le dispositif d'alimentation en détergent automatique (2) est pourvu d'un tuyau de transport (6) qui est adapté pour transporter le détergent,
le raccord de tuyau (4) est une structure hémisphérique en forme de bol ou creuse, une extrémité d'ouverture du raccord de tuyau (4) est reliée au conduit d'eau (5),
une ouverture de transport (8) est formée dans le raccord de tuyau (4) et le tuyau de transport (6) communique avec le raccord de tuyau (4) par le biais de l'ouverture de transport (8),
le raccord de tuyau (4) est également pourvu d'une admission d'eau (9), la canalisation d'admission d'eau (3) communique avec le raccord de tuyau (4) par le biais de l'admission d'eau (9), **caractérisé en ce que**
une direction d'admission de liquide de l'ouverture de transport (8) est déviée d'une direction d'écoulement d'eau dans l'admission d'eau (9) avec l'admission d'eau (9) comprenant une première admission d'eau (91) et une seconde admission d'eau (92), la première admission d'eau (91) et la seconde admission d'eau (92) étant agencées symétriquement par rapport à un axe du raccord de tuyau (4) de telle sorte que le détergent est dissout et dilué par de l'eau entrante tout en s'écoulant à travers le raccord de tuyau (4) et en continu dans le conduit d'eau (5), avant de s'écouler dans le tambour extérieur.

2. Système d'ajout de détergent automatique selon la revendication 1, **caractérisé par**
une pompe de vidange (7) dont une extrémité est reliée au tuyau de transport (6) et une autre extrémité est reliée au bac à détergent (1), et
un dispositif de commande relié séparément à un dispositif de commande de machine à laver et à la pompe de vidange (7).

3. Système d'ajout de détergent automatique selon la revendication 1 ou 2, **caractérisé en ce qu'**un corps de tuyau de la partie reliée du tuyau de transport (6) pour la liaison avec le raccord de tuyau (4) est un tuyau coudé, et le coude du tuyau coudé est agencé pour être en regard de l'ouverture de transport (8).

4. Système d'ajout de détergent automatique selon la revendication 1 ou 3, **caractérisé en ce que** l'admission d'eau (9) est située à une extrémité du raccord de tuyau (4) éloignée du conduit d'eau (5), et
l'ouverture de transport (8) est située au milieu du raccord de tuyau ou à une extrémité du raccord de tuyau (4) proche du conduit d'eau (5).

5. Système d'ajout de détergent automatique selon l'une quelconque des revendications 1 - 4, **caractérisé en ce que** le conduit d'eau (5) est pourvu d'une structure de dissolution de détergent (10), la structure de dissolution de détergent (10) est une structure d'écoulement hélicoïdal et/ou une structure destinée à allonger le temps d'écoulement d'un fluide.

6. Système d'ajout de détergent automatique selon la revendication 5, **caractérisé en ce que** la structure d'écoulement hélicoïdal est une pluralité de saillies/rainures réparties sur une paroi intérieure du corps de tuyau suivant une direction longitudinale du corps de tuyau,
le conduit d'eau (5) est, de préférence, un tuyau ondulé.

7. Système d'ajout de détergent automatique selon la revendication 5 ou 6, **caractérisé en ce que**, dans le conduit d'eau (5), la structure destinée à allonger le temps d'écoulement du fluide est un tube à serpentins ou un autre tuyau coudé.

8. Machine à laver comportant le système d'ajout de détergent automatique selon l'une quelconque des revendications 1 à 7.
